# EUROPEAN PATENT SPECIFICATION

(11) **EP 4 066 536 B1**
(45) Date of publication and mention of the grant of the patent: **08.04.2026**
(21) Application number: 20825066.2
(22) Date of filing: 23.11.2020
(51) Int. Cl.: H04W 28/02

(54) **METHODS, SYSTEMS, AND COMPUTER READABLE MEDIA FOR POLICING ACCESS POINT NAME-AGGREGATE MAXIMUM BIT RATE, APN-AMBR, ACROSS PACKET DATA NETWORK GATEWAY DATA PLANE, P-GW DP, WORKER INSTANCES**
VERFAHREN, SYSTEME UND COMPUTERLESBARE MEDIEN ZUR KONTROLLE DER AGGREGIERTEN MAXIMALEN BITRATE EINES ZUGANGSPUNKTNAMENS, APN-AMBR, ÜBER ARBEITERINSTANZEN EINER PAKETDATENNETZWERK-GATEWAYDATENEBENE, P-GW DP.
PROCÉDÉS, SYSTÈMES, ET SUPPORTS LISIBLES PAR ORDINATEUR POUR RÉGULER UN DÉBIT BINAIRE AGRÉGÉ MAXIMUM DE NOMS DE POINT D'ACCÈS, APN-AMBR, À TRAVERS DES INSTANCES D'EXÉCUTANTS DE PLAN DE DONNÉES DE PASSERELLE DE RÉSEAU DE DONNÉES PAR PAQUETS, P-GW DP.

(30) Priority: 26.11.2019 US 201916697021
(43) Date of publication of application: 05.10.2022
(73) Proprietor: Oracle International Corporation, Redwood Shores, CA 94065 (US)
(72) Inventor: GOEL, Yesh, Bangalore 560035 (IN)
(74) Representative: Gill Jennings & Every LLP
(86) International application number: PCT/US2020/061885
(87) International publication number: WO 2021/108334

(56) References cited:
- WO-A1-2017/143915
- US-A1- 2013 272 123
- US-A1- 2018 262 625

## Description

### TECHNICAL FIELD

The subject matter described herein relates to policing uplink and downlink APN-AMBR. More particularly, the subject matter described herein relates to methods, systems, and computer readable media for policing uplink and downlink APN-AMBR for PDN sessions assigned to different P-GW DP worker instances.

### BACKGROUND

In 3GPP communications networks, the PDN gateway or P-GW is the gateway that terminates the SGi interface towards the PDN. The PDN gateway performs various functions that are defined in 3GPP TS 23.401. These functions include per-user-based packet filtering, lawful interception, UE IP address allocation, transport level packet marking in both the uplink and downlink directions, accounting for inter-operator charging, uplink and downlink service level charging, interfacing with the offline charging system (OFCS), uplink and downlink service level gating and rate enforcement, uplink and downlink rate enforcement based on APN-AMBR, as well as other functions. It is the uplink and downlink rate enforcement based on APN-AMBR to which the subject matter described herein is directed.

APN-AMBR is the aggregate maximum bit rate usable by all PDN sessions assigned to non-guaranteed bit rate (non-GBR) bearers that use a given access point. One network architecture for a P-GW includes P-GW DP worker instances that are assigned to handle PDN sessions. In this architecture, all PDN sessions for the same UE through a single access point are required to be assigned to the same P-GW DP worker instance so that the P-GW DP worker instance can police all uplink and downlink bandwidth utilization by the UE through the particular access point. As a result, even if another P-GW DP worker instance has available processing capacity, new sessions for the same UE will be rejected.

Accordingly, in light of these difficulties, there exists a need for improved methods, systems, and computer readable media for policing APN-AMBR across P-GW DP worker instances.

WO2017/143915 describes a method for policing APN-AMBR.

### SUMMARY

The present invention is defined in the dependent claims. Further embodiments are defined in the dependent claims.

### BRIEF DESCRIPTION OF THE DRAWINGS

Figure 1 is a network diagram illustrating an exemplary network architecture including a P-GW and an access point (AP) served by the P-GW;
Figure 2 is a network diagram illustrating a P-GW providing data plane service for multiple PDN sessions where all PDN sessions for a given UE and APN are assigned to the same P-GW DP worker instance;
Figure 3 is a network diagram illustrating the use of an APN-AMBR policer to allocate APN-AMBR capacity to PDN sessions;
Figure 4 is a network diagram illustrating the assignment of PDN sessions for the same UE and APN to different P-GW DP worker instances and the use of the APN-AMBR policer to enforce APN-AMBR for the PDN sessions;
Figure 5 is a flow chart illustrating an exemplary fixed window token bucket algorithm that may be implemented by the APN-AMBR policer in Figure 3 to allocate APN-AMBR to PDN sessions;
Figure 6 is a flow chart illustrating a sliding window token bucket algorithm that may be implemented by the APN-AMBR policer to allocate APN-AMBR capacity to PDN sessions;
Figure 7A is a flow chart illustrating a token demanding algorithm that may be implemented by a P-GW DP worker instance;
Figure 7B is a flow chart illustrating a portion of the token demanding algorithm implemented by a P-GW DP worker instance; and
Figure 8 is a flow chart illustrating an exemplary process for using an APN-AMBR policer to allocate APN AMBR capacity.

### DETAILED DESCRIPTION

The subject matter described herein relates to methods, systems, and computer readable media for allocating APN-AMBR capacity at a P-GW. As stated above, one problem with existing network architectures is that PDN sessions for a given APN are required to be assigned to the same P-GW DP worker instance so that APN-AMBR can be enforced, which can result in a PDN session being denied due to capacity limits of the P-GW DP worker instance, even when another P-GW DP worker instance is available to handle a session. To solve this problem without unduly complicating the architecture of P-GW DP worker instances, an APN-AMBR policer separate from the P-GW may implement APN-AMBR capacity allocation and rate limiting policing of uplink and downlink PDN sessions.

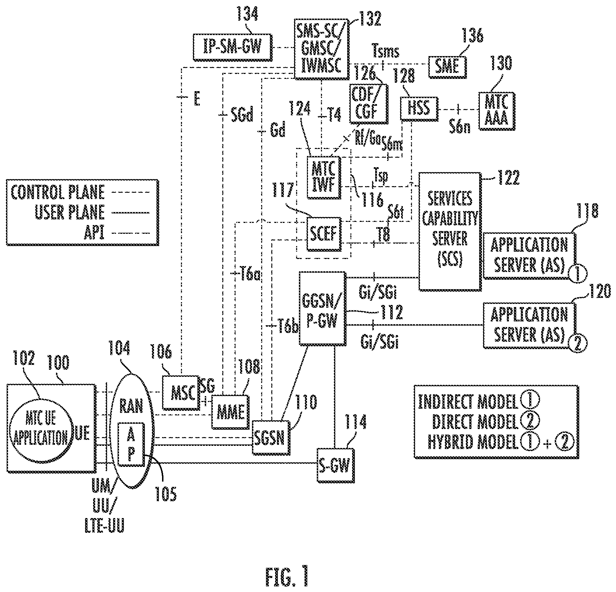

In order to more fully explain APN-AMBR bandwidth allocation and policing by the APN-AMBR policer, a background on the network architecture will first be presented. Figure 1 is a block diagram illustrating an exemplary 3GPP network architecture. The architecture illustrated in Figure 1 is defined in 3GPP TS 23.682. In Figure 1, the architecture includes user equipment (UE) **100,** which may include machine type communications (MTC) UE applications **102.** Thus, UE **100** may be an IoT device, such as a sensor, or a mobile handset used by a network subscriber.

UE **100** connects to the core network via radio access network (RAN) **104.** RAN **104** may be the evolved universal terrestrial radio access network (E-UTRAN), the new radio (NR) network, or a combination thereof. The node in radio access network **104** that provides radio connectivity to 2G and 3G UE devices is referred to as the base station. For 4G UEs, the node in radio access network **104** that provides radio network connectivity to the UEs is referred to as the evolved node B (eNB). For 5G-capable UEs, the node that provides NR connectivity to the devices is referred to as the gNode B (gNB). RAN **104** is intended to represent one or more base stations, eNBs, and gNBs.

Another way in which UE **100** can access the network is through an access point **105.** Access point **105** may be a Wi-Fi access point or other type of access point through which UE **100** has packet data network connectivity with network nodes, such as application server **120.**

Mobile switching center (MSC) **106** performs mobility management functions for 2G and 3G UE devices. Mobility management entity (MME) **108** performs mobility management functions for 4G capable UE devices. Mobility management functions performed by MSC **106** or MME **108** may include receiving mobile device registrations, communicating mobile subscriber registration and location information to home location register (HLR) or home subscriber service (HSS), and communicating with the nodes in RAN **104** through which UEs are attached to the network.

Serving general packet radio service support node (SGSN) **110** handles packet data communications with mobile users in the network. SGSN **110** functions as the service access point to the GPRS network for the mobile user. On the other side, SGSN **110** communicates with gateway GPRS support node/PDN gateway (GGSN/P-GW) **112,** which can function as the policy enforcement point for packet data communications with mobile users. A policy and charging rules function (PCRF) (not shown in Figure 1) may perform policy and charging functions for mobile users. The PCRF may include a policy data store that stores policies to be applied to mobile users. The policies may be installed in a policy enforcement point, such as GGSN/P-GW **112** to enforce policies for network usage and charging. A signaling gateway (SGW) **114** performs signaling protocol conversions to set up bearer communications with mobile users.

SCEF **116** includes a SCEF function **117** and a machine type communications interworking function (MTC-IWF) **124.** SCEF function **117,** on the application side, provides an interface for application servers, such as application servers (ASs) **118** and **120** and service capability server (SCS) **122** to communicate with the network. SCEF **116,** in one example, is the node that supports group triggering of IoT devices by application servers **118** and **120** and by service capability server **122.** In a direct communication model, application servers **118** and **120** may communicate directly with GGSN/P-GW **112.** In an indirect communication model, application servers **118** and **120** may communicate with the network via SCS **122** and SCEF **116.** It should also be noted that application servers **118** and **120** may communicate directly with SCEF**116**.

GGSN/P-GW **112** will hereinafter be referred to as P-GW **112,** as the bandwidth policing functions performed by P-GW **112** are of interest to the subject matter described herein. One such function is the policing of aggregate maximum bit rate. Aggregate maximum bit rate or AMBR is the bit rate towards a particular PDN that is shared among PDN users. Because the bit rate is shared, it is desirable to police the bit rate on a per user basis. One method for policing the bit rate is on a per-APN, per-UE basis, so that each UE and AP combination is allocated a portion of the AMBR up to a maximum portion. When the UE-APN combination reaches the maximum AMBR, further PDU sessions for that particular UE will be denied. As will be described in more detail below, the subject matter described herein includes an APN-AMBR policer that allows PDN sessions for a UE and ABN combination to be distributed across multiple P-GW DP worker instances.

MTC-IWF **124** facilitates communication with IoT devices that do not have IP communications capabilities. A charging data function/charging gateway function (CDF/CGF) **126** generates billing records for network usage. A home subscriber server (HSS) **128** stores subscription and location information for UE devices. In one example, HSS **128** may also be configured with mappings used by SCEF **116** or another node to translate an external group ID into individual IoT device identifiers, such as international mobile subscriber identifiers (IMSIs). A machine type communications authentication authorization and accounting (MTC AAA) server **130** performs AAA functions for MTC devices.

The network architecture may include a short message service center/gateway message service center/interworking message service center (SMSC/GMSC/IWMSC) **132** for generating and delivering SMS messages to IoT devices. An IP short message gateway (IP-SM-GW) **134** may convert IP messages to SMS messages and vice versa. A short message entity (SME) **136** sends and receives SMS messages.

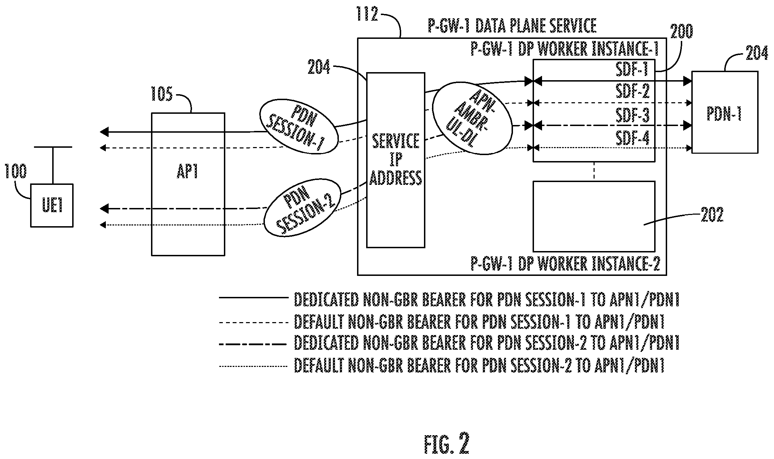

As stated above, one problem with the current P-GW architecture is that in order to properly police AGBR limits, all PDN sessions for a particular user and APN combination are required to be assigned to the same P-GW DP worker instance. Figure 2 illustrates this problem in more detail. In Figure 2, P-GW **112** includes P-GW DP worker instances **200** and **202.** Each P-GW DP worker instance **200** and **202** handles APN AMBR uplink and downlink rate policing for a user and APN instance for messages or PDN sessions directed to or from a particular PDN **204.** P-GW **112** is assigned a service IP address **206** that AP1 **105** uses to contact P-GW **112.** In the illustrated example, two different PDN sessions having a non-GBR dedicated bearer and a default non-GBR bearer have been established between UE **100** and PDN **204.** Each PDN session includes data in the uplink and downlink directions that must be policed for AMBR compliance.

In the illustrated example, all of the PDN sessions for UE **100** are handled by P-GW DP worker instance **200.** One problem with this architecture is that when P-GW DP worker instance **200** is running at full rated capacity and handling PDN sessions from a single UE or multiple UEs, a new PDN session for any of the UEs currently being handled by P-GW DP worker instance **200** must be rejected because P-GW DP worker instance **200** does not have the capacity to handle another session. This is true even though P-GW DP worker instance **202** has capacity. Because there is no communication between P-GW DP worker instances for AMBR compliance, using the current architecture, all P-GW DP worker instances must be assigned all of the PDN sessions for a given UE.

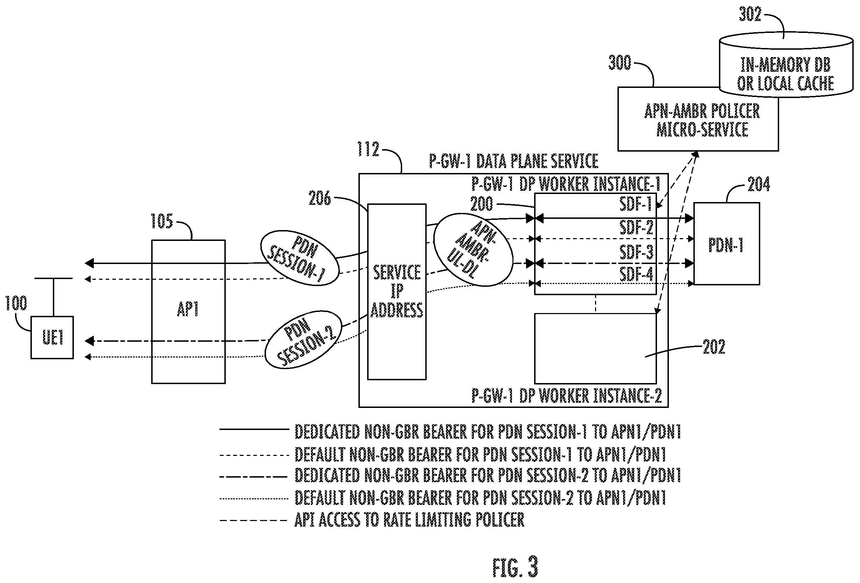

The subject matter described herein provides a solution to this problem by allowing PDN sessions of a UE towards a single PDN to span different P-GW DP worker instances. In order to provide AMBR compliance, an APN-AMBR policer is provided. Figure 3 illustrates an example of the APN-AMBR policer. In Figure 3, APN-AMBR policer **300** may be implemented as a microservice located on a separate computing platform from P-GW **112** and P-GW DP worker instances **200** and **202.** APN-AMBR policer **300** maintains uplink and downlink APN-AMBR per-UE, per-APN, even when the PDN sessions for a given UE reside on different P-GW DP worker instances. The per-UE, per-APN, and total AMBR used by each UE-APN combination is maintained in database **302.** APN-AMBR policer **300** allocates APN-AMBR capacity slices to each P-GW DP worker instance for each UE/APN using a token bucket algorithm, which will be described in detail below. APN-AMBR policer maintains used up capacities for each UE and APN combination and stores the data in database **302,** which may be an in-memory database or local cache for faster access.

As a result of the policing performed by APN-AMBR policer **300,** the APN-AMBR policing logic at each P-GW DP worker instance is simplified in that each P-GW DP worker instance will request AMBR capacity slices from APN- AMBR policer **300** and receive grants from APN- AMBR policer **300.** Each P-GW DP worker instance **200** and **202** will then use the capacity in each grant using a token consumption algorithm, which will be described in detail below. If a current slice of capacity is exhausted, the P-GW DP worker instance will request additional capacity from APN-AMBR policer **300.** In the case where APN-AMBR policer **300** refuses a capacity request, the requesting P-GW DP worker instance will drop traffic. APN -AMBR policing is seamless when P-GW DP worker instances scale up or down.

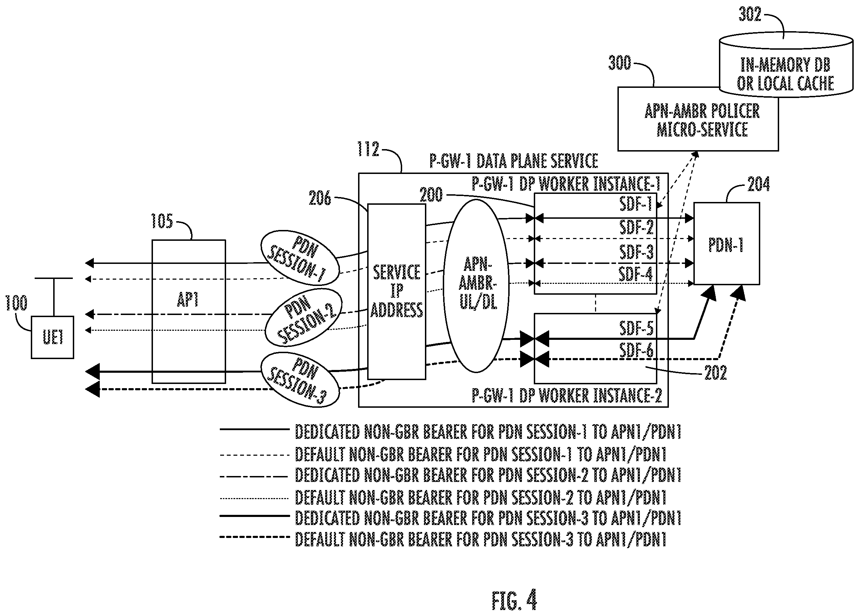

Figure 4 illustrates the case where a PDN session for a given UE and APN combination is assigned to a different P-GW DP worker instance than other PDN sessions involving the same UE and APN combination. In Figure 4, PDN session 1 and PDN session 2 for APN1 and UE1 are assigned to P-GW DP worker instance 1 **200.** An additional PDN session, PDN3, is assigned to P-GW DP worker instance **202.** The additional PDN session is for the same UE and APN combination as to those assigned to P-GW DP worker instance 1. APN-APN-AMBR policer **300** enforces APN-AMBR for the UE and APN combination for P-GW DP worker instance 1 **200** and P-GW DP worker instance 2 **202.**

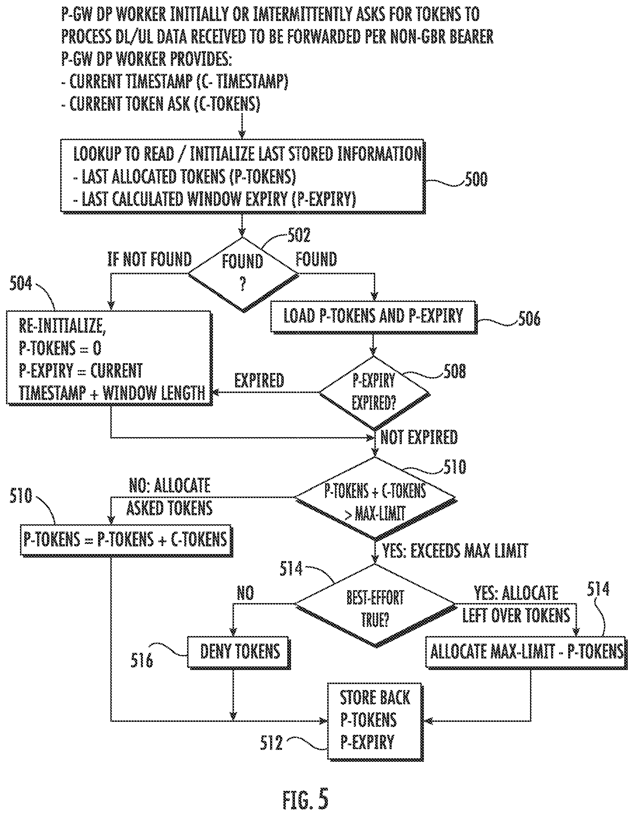

As stated above, in one example, APN-AMBR policer **300** implements a token bucket algorithm for performing rate limiting policing on at least one of a per-UE, per-PDN session, and per-APN basis. The token bucket algorithm may be implemented for every PDN for every rate limiting window, where a rate limiting window is a time period, such as 1 second, over which a rate limiting capacity of the PDN can be defined using a number of tokens that can be granted during the window. A P-GW DP worker instance may demand multiple tokens in a rate limiting window from APN-AMBR policer **300** (1 token for each unit of data to be transmitted (e.g., 1 token = 100 kbits)). The token demanding algorithm for P-GW DP worker instances will be described in detail below. APN-AMBR policing may be implemented in two different algorithms. One algorithm uses a fixed window and another algorithm uses a sliding window. Figure 5 illustrates the fixed window rate policing algorithm that may be implemented by APN-AMBR policer **300.** The fixed window algorithm works with two different configurations. One configuration is max limit configuration where, if the number of requested tokens would cause the APN-AMBR to be exceeded, the request is denied. Another configuration option is the best effort configuration option in which if the number of tokens requested in a given window exceeds the number of available tokens, the available tokens can be allocated even though they do not completely satisfy the current request. For every token demand, APN-AMBR policer **300** returns the granted tokens as per the algorithm and the time remaining in the current window.

Referring to the flow chart in Figure 5, a P-GW DP worker instance may initially or intermittently request tokens to process received data to be forwarded per non-GBR bearer. The algorithms illustrated in Figures 5-7 run separately for uplink and downlink data for each non-GBR bearer. The request for allocation of tokens may include the current timestamp and the current token ask (number of tokens requested). In step **500,** APN-AMBR policer **300** receives the request for allocation of tokens and performs a lookup in database **302** to determine whether the request is a new request for the current time interval or whether tokens have already been allocated to the requester during the current time interval. Here, the requester may be identified by a combination of APN and UE identifier. In step **502,** if a record is not found in the lookup, the request is a new request, and control proceeds to step **504** where we begin the first window of token allocation for the UE-APN combination. Here, the number of previously allocated tokens is set to zero because the window is just been created, and the previous expiry time is set to the current timestamp plus the window length, i.e., the expiry time of the created window. In step **502,** if a record is found, then the request is a subsequent request for the same requester, and control proceeds to step **506** where the previously allocated tokens and the previous expiry time are loaded.

In step **508,** it is determined whether the P-Expiry timer has expired. The P-Expiry timer controls the expiration of previously allocated tokens. If the P-Expiry timer has expired, control proceeds to step **504** where the current request is processed like a new request. If the previous expiry timer has not expired in step **508,** control proceeds to step **510.** In step **510,** it is determined whether the previous number of allocated tokens plus the current number of requested tokens exceeds the maximum limit for the UE and APN combination for the time interval. If the maximum limit is not exceeded, control proceeds to step **510** where the requested tokens are allocated, and the variable P-Tokens (previous tokens) is set to be equal to the current value of P-Tokens plus C-Tokens (currently requested tokens). In step **512,** the values of P-Tokens and C-Tokens are stored in database **302.** The P-GW DP worker instance can then consume the tokens by forwarding uplink or downlink data over the non-GBR bearer. In one implementation, one token allows the P-GW DP worker instance to send an operator-configured amount of uplink or downlink data (e.g., one token allows 100 kbits of data to be transferred). After the P-GW DP worker instance sends the defined amount of uplink data over the PDN or downlink data to the UE, the P-GW DP worker instance decrements the number of available tokens.

Returning to step **510,** if the previously allocated tokens plus the currently requested tokens for the time interval exceeds the maximum limit, control proceeds to step **512** where it is determined whether best effort allocation is implemented. As described above, best effort allocation allows tokens to be allocated even when the number of available tokens is not sufficient to satisfy the current request. If best effort allocation is not implemented, control proceeds to step **516** where the token demand is denied and then to **512** where the values of P-Tokens and P-Expiry are stored in database **302.** If best effort allocation is implemented, control proceeds to step **514** where the leftover tokens are allocated. The number of tokens allocated is equal to the maximum limit minus the previously allocated tokens. Control then proceeds to step **512** where the values of P-Tokens and P-Expiry are stored in database **302.**

Figure 5 illustrates the fixed window token allocation algorithm implemented by APN-AMBR policer **300.** As stated above, in another example, the token allocation algorithm may utilize a sliding window. In a sliding window approach, the initial and expiry time for a given token allocation window move in time. Tokens within a window are divided into buckets, and each bucket has a start time and a length. When the current timestamp passes the end of a bucket (bucket start time plus length), unused tokens within the bucket expire and can be reclaimed and used to satisfy requests for tokens from the same or other P-GW DP worker instances. Using a sliding window thus increases the availability of unused tokens.

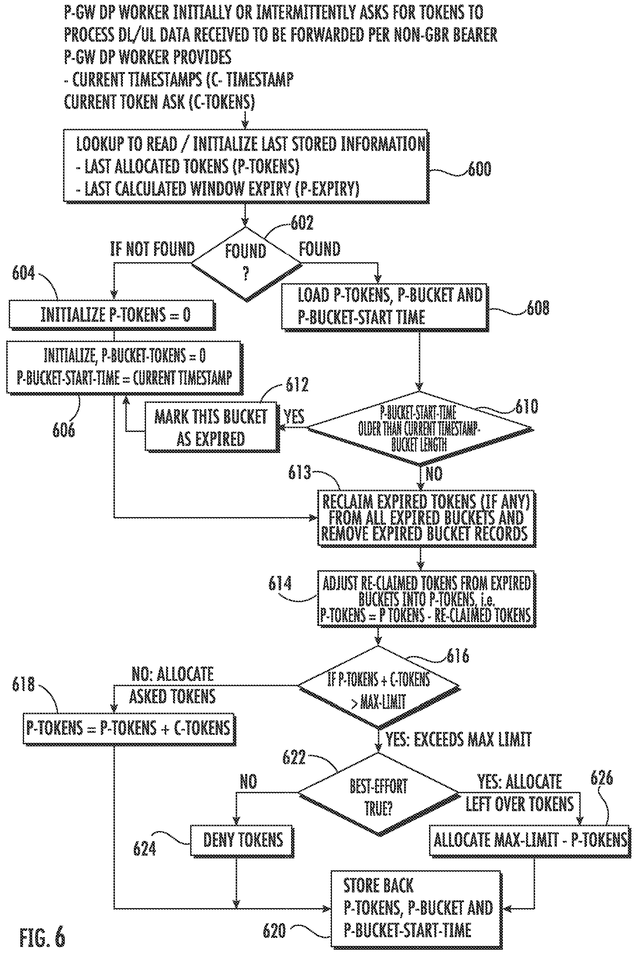

Figure 6 is a flow chart illustrating an exemplary sliding window token bucket algorithm that may be implemented by APN-AMBR policer **300.** Referring to Figure 6, a P-GW DP worker instance initiates or intermittently asks for tokens to process uplink or downlink data that the P-GW DP worker instance receives for transmission. The request specifies the current timestamp and the current number of tokens requested. In step **600,** APN-AMBR policer **300** performs a lookup in database **302** to determine whether the request is a new request for the time interval or an existing request. If a database record is not located in the lookup, the request is a new request. Accordingly, control proceeds from step **602** to step **604** where the previously allocated tokens variable (P-Tokens) for the time interval is initialized to zero. Control then proceeds to step **606** where the variable P-Bucket-Tokens is set to zero and the variable P-Bucket-Start-Timestamp is set to the current timestamp.

In step **602,** if a database record is found, then the request is a subsequent request for the current time interval. If the request is a subsequent request, control proceeds to step **608** where the previously allocated tokens (P-Tokens), the variables P-Bucket, P-Tokens, and P-Bucket-Start-Time are initialized to the values located in the record. Control then proceeds to step **610** where it is determined whether the variable P-Bucket-Start-Time is older than the current timestamp minus the bucket length. If this is true, control proceeds to step **612** where the current bucket is marked as expired and then to step **606** where the variable P-Bucket-Tokens is set to zero, and the variable P-Bucket-Start-Time is set to the current timestamp.

After step **610,** control proceeds to step **613** where any expired tokens are reclaimed from expired buckets, and expired bucket records are removed. From step **613,** control proceeds to step **614** where reclaimed tokens from expired buckets are adjusted into P-Tokens (i.e., P-Tokens = P-Tokens - reclaimed tokens). Control then proceeds to step **616** where it is determined whether the sum of the previously allocated tokens and the current requested tokens is greater than the maximum limit. If the sum of the previously allocated tokens and the currently requested tokens is not greater than the maximum limit, the tokens are allocated and control proceeds to step **618** where P-Tokens is set to the previously allocated tokens plus the currently requested tokens. Control then proceeds to step **620** where the values of the variables P-Tokens, P-Bucket, and P-Bucket-Start-Time are stored in database **302.**

Referring to step **616,** if the sum of the previously allocated tokens and the currently requested tokens exceeds the maximum limit for the time interval, control proceeds to step **622** where it is determined whether best effort allocation is implemented. If best effort allocation is not implemented, control proceeds to step **624** where the request is denied. If best effort allocation is implemented, control proceeds to step **626** where the remaining tokens are allocated to partially satisfy the request. Control then proceeds to step **620** where the values of the P-Tokens, P-Bucket, P-Bucket-Start-Time variables are stored in database **302.**

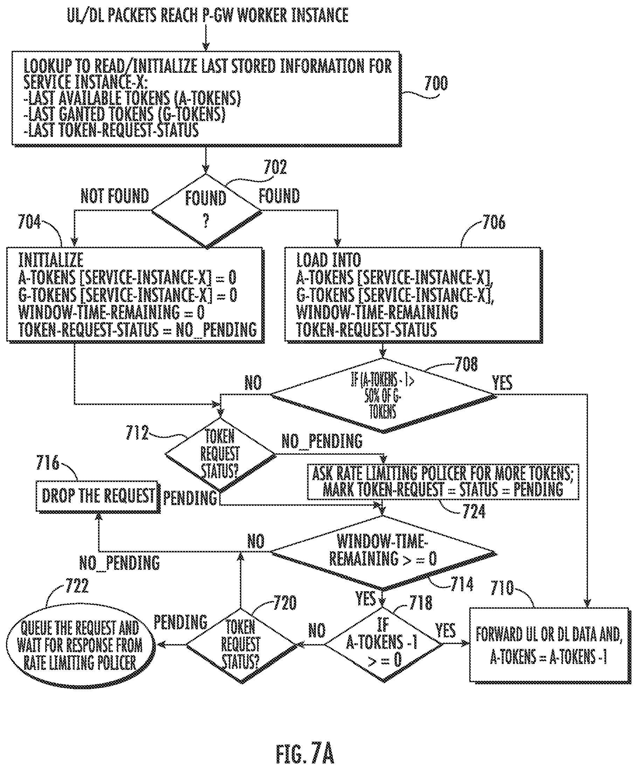

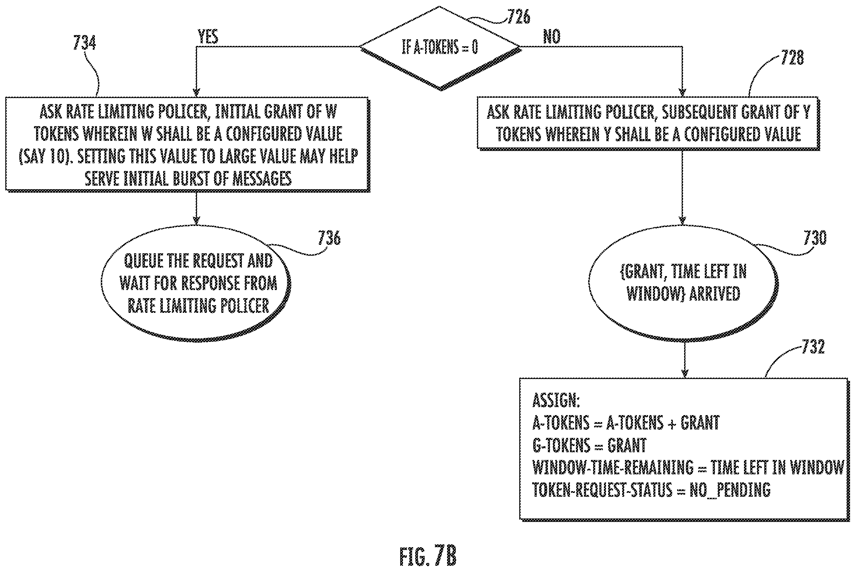

As stated above, by implementing rate limiting policing at APN-AMBR policer **300** separate from the P-GW DP worker instances, the logic of the P-GW DP worker instances is simplified. Figures 7A and 7B illustrate the P-GW DP worker instances token demanding algorithm that may be implemented by each P-GW DP worker instance. In general, each P-GW DP worker instance receives uplink or downlink data, determines the number of tokens required to transmit the data and asks APN-AMBR policer **300** for an initial grant of tokens. For subsequently received data, the P-GW DP worker instance checks whether the number of available tokens is greater than a configurable percentage of the granted tokens and forwards the request. For example, in an aggressive token demanding algorithm, the threshold amount may be set to 50% or higher to anticipate last minute token scarcity. In a less aggressive algorithm, the threshold may be set to a lower percentage, such as 25%, to allow the P-GW DP worker instances to nearly deplete their token allocations before demanding more tokens. Subsequent token demands can be fixed in size or successively increasing in size, e.g., based on a Fibonacci series. P-GW DP worker instances do not need to manage the rate limiting time window traversal. The APN-AMBR policer will provide remaining time in the current window.

Referring to the flow chart illustrated in Figure 7A, a P-GW DP worker instance receives uplink or downlink data to be transmitted. In step **700,** the P-GW DP worker instance performs a lookup in its local database for service instance x, which may represent uplink or downlink data for a non-GBR bearer assigned to a UE-APN combination to determine the current number of tokens available, the current number of tokens granted, and the last token request status for the given service instance. It is noted that the P-GW DP worker instance is not required to know the rate capacity of the service instance or the amount of available capacity that is being used by other consumers. The database maintained by each P-GW DP worker instance may contain the number of tokens granted by the APN-AMBR policer to the P-GW DP worker instance for each service instance and the number of those tokens that have not been used.

In step **702,** if a record is not found, this means that the P-GW DP worker instance has not requested any tokens for the service instance (i.e., non-GBR bearer) during the current time interval. Control then proceeds to step **704** where the P-GW DP worker instance initializes the available tokens for service instance x to 0, the granted tokens for service instance x to 0, the window time remaining to 0, and the token request status to none pending.

If a record is found, this means that the P-GW DP worker instance has already requested tokens during the current time interval for the service instance. If a record is found, control proceeds to step **706** where the P-GW DP worker instance loads the information located in the lookup. The information loaded includes the available tokens for the service instance, the granted tokens for the service instance, the window time remaining, and the token request status. In step **708,** the P-GW DP worker instance determines whether the available tokens minus one is greater than the above-referenced configurable percentage of the granted tokens. In other words, the P-GW DP worker instance will ask for new tokens if more than half of the existing tokens previously allocated to the service instance have been used for the current time interval. This is an aggressive algorithm but may prevent the service instance from starving.

If the available tokens minus one is greater than the configurable percentage of the granted tokens, no new tokens are needed and control proceeds to step **710** where the uplink or downlink data is forwarded to the PDN or to the UE, and the available tokens variable is decremented to indicate the use of one token to satisfy the data transmission.

If the available tokens minus one is not greater than the configurable percentage of the granted tokens, control proceeds to step **712** where the P-GW DP worker instance determines whether there is a pending token request for the current time interval. If there is a pending token request, control proceeds to step **714** where it is determined whether there is any time remaining the current window. If there is no time remaining in the current window, the P-GW DP worker instance drops the token request in step **716.** If there is time remaining in the current window, control proceeds to step **718** where the P-GW DP worker instance determines whether there are any available tokens. If there are available tokens, control proceeds to step **710** where the P-GW DP worker instance forwards the uplink or downlink data and decrements the number of available tokens. If there are no available tokens, control proceeds to step **720,** where it is determined what the pending token request status is. If there is a token status request, control proceeds to step **722** where the request is queued, and the P-GW DP worker instance waits for the response from the APN-AMBR policer. If there are no pending token requests, control proceeds to step **716** where the current request is dropped.

In step **712,** if there are no pending token requests and the number of available tokens is less than half of the granted tokens, control proceeds to step **724** where the P-GW DP worker instance requests tokens from the APN-AMBR policer and marks the pending token status request variable to pending.

Figure 7B illustrates the token demanding algorithm. In Figure 7B, in step **726,** if the number of the available tokens is not equal to zero, control proceeds to step **728** where the P-GW DP worker instance asks the APN-AMBR policer for a grant of y tokens where y is configurable value. In step 730, the P-GW DP worker instance receives a grant with time left in the current window. In step **732,** the P-GW DP worker instance sets the available tokens to the number of currently available tokens plus the grant. The granted tokens variable is set to the number of tokens in the grant. The window time remaining variable is set to the time remaining in the current window and the token request status is set to no pending requests.

In step **726,** if the number of available tokens is equal to zero, control proceeds to step **734** where the P-GW DP worker instance asks the APN-AMBR policer for an initial grant w tokens, where w is a configurable value. Setting w to be a large value may facilitate serving an initial burst of messages. In step **736,** the P-GW DP worker instance waits for grant from the rate the APN-AMBR policer. When the grant occurs in step **730,** control proceeds to step **732** where the P-GW DP worker instance updates its variables to reflect the token grant.

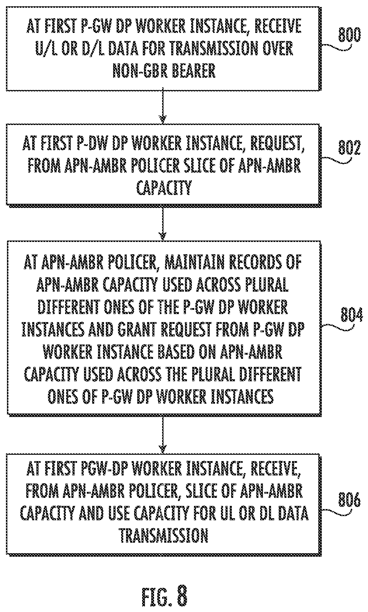

Figure 8 is a flow chart illustrating an exemplary overall process for enforcing APN-AMBR using an APN-AMBR policer. Referring to Figure 8, in step **800,** a first P-GW DP worker instance receives uplink or downlink data for transmission over a non-GBR bearer. For example, P-GW DP worker instance **200** may receive uplink data from a UE for transmission to a PDN via a non-GBR bearer or downlink data from the PDN for transmission to the UE over the non-GBR bearer..

In step **802,** the process includes, at the first P-GW DP worker instance, requesting capacity from the APN-AMBR policer. For example, P-GW DP worker instance **200** may request an allocation of tokens from APN-AMBR policer **300** corresponding to the amount of uplink or downlink data that the P-GW DP worker instance has received for transmission.

In step **804,** the process includes, at the APN-AMBR policer, maintaining records of APN-AMBR capacity across plural different ones of the P-GW DP worker instances and granting the request from the first P-GW DP worker instance based on the APN-AMBR capacity used across the plural P-GW DP worker instances. For example, APN-AMBR policer **300** may determine that tokens are available to the UE-APN combination for the given time interval because the configured limit of the APN-AMBR available to the UE-APN combination has not been reached. In such a case, APN-AMBR policer **300** may issue a grant of tokens to P-GW DP worker instance **200.** It should be noted that APN-AMBR policer **300** maintains records of used-up APN-AMBR capacity across plural P-GW DP worker instances for the case where the UE-APN combination has PDN sessions being handled by different P-GW DP worker instances. This is one of the advantages of the subject matter described herein in that rate limiting policing can be performed without requiring all PDN sessions for a given UE-APN combination to be assigned to the same P-GW DP worker instance. For the case where PDN sessions for the same UE-APN combination are assigned to different P-GW DP worker instances, APN-AMBR policer **300** will update the capacity used any time a grant of tokens is issued to any of the PDN sessions. In addition, because APN-AMBR policer **300** handles token allocations across all P-GW DP worker instances for a given P-GW, APN-AMBR policer **300** can also enforce the APN-AMBR limit across PDN sessions to different UEs, even when the PDN sessions of the different UEs are assigned to different P-GW DP worker instances.

The following examples illustrate functionality and advantages of the subject matter described herein. Suppose the APN-AMBR is 100 mbps for a particular APN. The APN-AMBR is an aggregate measure of the total capacity that can be used by non-GBR bearers of all UEs connected to a PDN through a given AP. In one example, the APN-AMBR policer described herein may maintain capacities per-UE-APN combination and allocate portions of the APN-AMBR to each UE-APN combination. For example, suppose the APN-AMBR is 100 mbps in each direction, and there are two UEs, each with two different sessions connected to a PDN through a given access point. Table 1 shown below is an example of the records that may be maintained in database **302** by APN-AMBR policer in such a case:

**Table 1: Example APN-AMBR Policing Records**

| UE-APN COMBINATION | PDN Session | Direction | APN Capacity Used | MAX APN-AMBR SLICE ALLOCATION |
|---|---|---|---|---|
| UE1-APN1 | PDN1 | Uplink | 10 mbps | 50 mbps |
| | | Downlink | 20 mbps | 50 mbps |
| | PDN2 | Uplink | 5 mbps | 50 mbps |
| | | Downlink | 30 mbps | 50 mbps |
| UE2- APN1 | PDN3 | Uplink | 20 mbps | 50 mpbs |
| | | Downlink | 30 mbps | 50 mbps |

In Table 1, APN-AMBR policer **300** stores a single record for each UE-APN combination and may store, in each record, or compute from data in each record, the total amount of AMBR capacity used by each UE-APN combination, per-PDN session, and per-direction. APN-AMBR policer **300** may also store, in each record, a maximum APN-AMBR allocation for each UE-APN combination.

APN-AMBR policer **300** can use the data in Table 1 to police AMBR at the APN, UE, PDN session, and/or traffic direction level. For example, in Table 1, the combination UE1-APN1 is allocated 50 mbps of the APN-AMBR for each of the uplink and downlink directions. The current uplink AMBR capacity used is 10 mbps + 5 mbps = 15 mbps, which means that UE1 has 50 mbps-15 mbps = 35 mbps of additional capacity to use. In this manner, the APN-AMBR policer can ensure that the total bandwidth used by both sessions does not exceed the portion or slice of the APN-AMBR allocated to each UE-APN combination. The same advantage is realized if PDN sessions for different UEs through the same APN are handled by different P-GW DP worker instances. For example, suppose UE1 and UE2 are both connected to PDN1 through AP1, handled by different P-GW DP worker instances, and the APN-AMBR is 100 mpbs. In this example, each of UE1 and UE2 may have access to their respective share (e.g. 50 mbps each) of the APN-AMBR and APN-AMBR policer **300** may police the bandwidth used by both sessions to ensure that the APN-AMBR is not exceeded.

Returning to Figure 8, in step **806,** the process includes, at the first P-GW DP worker instance, receiving, from the APN-AMBR policer, a slice of APN-AMBR capacity and using the capacity for uplink or downlink data transmission. For example, P-GW DP worker instance **200** may receive a grant of tokens from APN-AMBR policer **300** and consume the tokens to transmit the received uplink or downlink data.

Using the APN-AMBR policer, uplink and downlink traffic passing through the P-GW data plane can be more efficiently handled. The algorithms implemented by the P-GW DP worker instances are simplified as the worker instances are not required to perform policing or keep track of bandwidth used by PDN sessions assigned to another P-GW DP worker instance. In addition, PDN sessions for the same APN can be flexibly assigned across P-GW DP worker instances. Further, the uplink and downlink bandwidth offered to a PDN session for a particular APN is not limited to the rated capacity of a P-GW DP worker instance.

## Claims

1. A method for policing access point name aggregated maximum bit rate, APN-AMBR, the method comprising:
at a packet data network, PDN, gateway, P-GW, including at least one processor and a plurality of P-GW data plane, DP, worker instances implemented by the at least one processor:
receiving (800), uplink data to be transmitted over a non-guaranteed bit rate, non-GBR, bearer associated with a first PDN session from a first user equipment, UE, via an access point, AP, or downlink data to be transmitted over the non-GBR bearer to the first UE via the AP;
forwarding the uplink or downlink data to a first P-GW DP worker instance of the plurality of P-GW DP worker instances that is assigned to the PDN session;
at the first P-GW DP worker instance, transmitting (802), to an APN-AMBR policer separate from the P-GW, a request for a slice of APN-AMBR capacity for processing the uplink or downlink data;
at the APN-AMBR policer:
maintaining (804) records of APN-AMBR capacity used by UEs having PDN sessions assigned to different ones of the P-GW DP worker instances; and
granting or denying the request based on the APN-AMBR capacity used by the PDN sessions assigned to the different ones of the P-GW DP worker instances;
**characterized in that** the transmitting the request for the slice of the APN-AMBR capacity includes requesting an allocation of tokens from the APN-AMBR policer for processing at least some of the uplink or downlink data;
the method further comprising at the APN-AMBR policer, maintaining, for a plurality of UE-APN combinations, a maximum limit of tokens that can be allocated in a time interval and granting or denying the request for allocation of tokens based on whether a number of tokens requested by the request for allocation of tokens would cause the maximum limit of tokens to be exceeded, and the maximum limit of tokens is based on the APN-AMBR.

2. The method of claim 1 wherein granting or denying the request includes granting the request and further comprising, at the APN-AMBR policer, communicating notification of the grant to the first P-GW DP worker instance and, at the first P-GW DP worker instance, receiving the notification of the grant and consuming the slice of APN-AMBR capacity represented by the grant by transmitting the uplink or downlink data.

3. The method of claim 1 or claim 2 wherein maintaining records of the APN-AMBR capacity used by the UEs includes maintaining records of the APN-AMBR capacity used by PDN sessions of the first UE that are assigned to the different ones of the P-GW DP worker instances.

4. The method of any preceding claim wherein maintaining records of the APN-AMBR capacity used by the UEs includes maintaining records of the APN-AMBR capacity used by different PDN sessions of different UEs that are assigned to the different ones of the P-GW DP worker instances.

5. The method of any preceding claim wherein requesting an allocation of tokens includes requesting the allocation of tokens in response to a percentage of granted tokens available to the first P-GW DP worker instance being less than a threshold amount.

6. The method of any preceding claim comprising implementing a fixed or a sliding window during which tokens can be granted.

7. The method of any of claims 1 to 6 wherein granting or denying the request includes implementing best effort token allocation wherein if a number of tokens requested by the first P-GW DP worker instance during a time interval would cause the maximum allocated tokens during the time interval to be exceeded, granting a remainder of tokens available in the time interval that would not cause the maximum limit of tokens to be exceeded.

8. The method of any of claims 1 to 6 wherein granting or denying the request includes implementing max limit token allocation by denying a request for allocation of tokens if a requested number of tokens would cause the maximum limit of tokens to be exceeded.

9. A system for policing access point name aggregated maximum bit rate, APN-AMBR, the system comprising:
a packet data network, PDN, gateway, P-GW, including at least one processor and a plurality of P-GW data plane, DP, worker instances implemented by the at least one processor, wherein the P-GW is configured to receive, uplink data to be transmitted over a non-guaranteed bit rate, non-GBR, bearer associated with a first PDN session from a first user equipment, UE, via an access point, AP, or downlink data to be transmitted over the non-GBR bearer to the first UE via the AP, forward the uplink or downlink data to a first P-GW DP worker instance of the plurality of P-GW DP worker instances that is assigned to the PDN session, and the first P-GW DP worker instance is configured to request a slice of APN-AMBR capacity for processing the uplink or downlink data; and
an APN-AMBR policer configured to maintain records of APN-AMBR capacity used by UEs having PDN sessions assigned to different ones of the P-GW DP worker instances, and grant or deny the request based on the APN-AMBR capacity used by the PDN sessions assigned to the different ones of the P-GW DP worker instances;
**characterized in that** the first P-GW DP worker instance is configured to request the slice of APN-AMBR capacity by requesting an allocation of tokens from the APN-AMBR policer for processing at least some of the uplink or downlink data;
wherein the APN-AMBR policer is configured to maintain a maximum limit of tokens that can be allocated in a time interval and to grant or deny the request for allocation of tokens based on whether a number of tokens requested by the request for allocation of tokens would cause the maximum limit of tokens to be exceeded, and the maximum limit of tokens is based on the APN-AMBR.

10. The system of claim 9, wherein the APN-AMBR policer is configured to grant the request, communicate notification of the grant to the first P-GW DP worker instance, and wherein the first P-GW DP worker instance is configured to receive the notification of the grant and consume the slice of APN-AMBR capacity represented by the grant by transmitting the uplink or downlink data.

11. The system of claim 9 or claim 10 wherein the APN-AMBR policer is configured to maintain records of the APN-AMBR capacity used by PDN sessions of the first UE that are assigned to the different ones of the P-GW DP worker instances.

12. The system of any of claims 9 to 11 wherein the APN-AMBR policer is configured to maintain records of the APN-AMBR capacity used by different PDN sessions of different UEs that are assigned to the different ones of the P-GW DP worker instances.

13. The system of any of claims 9 to 12 wherein the APN-AMBR policer is configured to implement best effort token allocation wherein if a number of tokens requested by the first P-GW DP worker instance during a time interval would cause the maximum allocated tokens during the time interval to be exceeded, grant a remainder of tokens available in the time interval that would not cause the maximum limit of tokens to be exceeded, and the maximum limit of tokens is based on the APN-AMBR.

14. The system of any of claims 9 to 12 wherein the APN-AMBR policer is configured to implement max limit token allocation by denying a request for allocation of tokens if a requested number of tokens would cause the maximum limit of tokens to be exceeded and the maximum limit is based on the APN-AMBR.

15. A non-transitory computer readable medium having stored thereon executable instructions that when executed by at least one processor of at least one computer control the at least one computer to perform steps comprising:
at a packet data network, PDN, gateway, P-GW, including a plurality of P-GW data plane, DP, worker instances:
receiving, uplink data to be transmitted over a non-guaranteed bit rate, non-GBR, bearer associated with a first PDN session from a first user equipment, UE, via an access point, AP, or downlink data to be transmitted over the non-GBR bearer to the first UE via the AP;
forwarding the uplink or downlink data to a first P-GW DP worker instance of the plurality of P-GW DP worker instances that is assigned to the PDN session;
at the first P-GW DP worker instance, transmitting, to an APN-AMBR policer separate from the P-GW, a request for a slice of APN-AMBR capacity for processing the uplink or downlink data;
at the APN-AMBR policer:
maintaining records of APN-AMBR capacity used by UEs having PDN sessions assigned to different ones of the P-GW DP worker instances; and
granting or denying the request based on the APN-AMBR capacity used by the PDN sessions assigned to the different ones of the P-GW DP worker instances;
**characterized in that** the transmitting the request for the slice of the APN-AMBR capacity includes requesting an allocation of tokens from the APN-AMBR policer for processing at least some of the uplink or downlink data;
the method further comprising at the APN-AMBR policer, maintaining, for a plurality of UE-APN combinations, a maximum limit of tokens that can be allocated in a time interval and granting or denying the request for allocation of tokens based on whether a number of tokens requested by the request for allocation of tokens would cause the maximum limit of tokens to be exceeded, and the maximum limit of tokens is based on the APN-AMBR.

## Patentansprüche

1. Verfahren zur Überwachung der aggregierten maximalen Bitrate von Zugangspunkten, APN-AMBR, wobei das Verfahren umfasst:
in einem Paketdatennetzwerk-, PDN, Gateway, P-GW, mit mindestens einem Prozessor und einer Vielzahl von P-GW-Datenebenen-, DP, Worker-Instanzen, die durch den mindestens einen Prozessor implementiert werden:
Empfangen (800) von Uplink-Daten, die über einen nicht-garantierten Bitraten-, Nicht-GBR-, Träger, der mit einer ersten PDN-Sitzung verbunden ist, von einer ersten Benutzervorrichtung (User Equipment, UE) über einen Zugangspunkt (Access Point, AP) übertragen werden sollen, oder von Downlink-Daten, die über den Nicht-GBR-Träger an die erste UE über den AP übertragen werden sollen;
Weiterleiten der Uplink- oder Downlink-Daten an eine erste P-GW-DP-Worker-Instanz aus der Vielzahl von P-GW-DP-Worker-Instanzen, die der PDN-Sitzung zugewiesen ist;
bei der ersten P-GW-DP-Worker-Instanz, Übertragen (802), an einen von dem P-GW getrennten APN-AMBR-Policer, einer Anforderung für eine Scheibe von APN-AMBR-Kapazität zur Verarbeitung der Uplink- oder Downlink-Daten;
bei dem APN-AMBR-Policer:
Verwalten (804) von Aufzeichnungen der APN-AMBR-Kapazität, die von UEs verwendet wird, die PDN-Sitzungen haben, die verschiedenen der P-GW-DP-Worker-Instanzen zugewiesen sind; und
Gewähren oder Ablehnen der Anforderung basierend auf der APN-AMBR-Kapazität, die von den PDN-Sitzungen verwendet wird, die den verschiedenen P-GW-DP-Worker-Instanzen zugewiesen sind;
**dadurch gekennzeichnet, dass** das Übertragen der Anforderung für die Scheibe der APN-AMBR-Kapazität das Anfordern einer Zuteilung von Token von dem APN-AMBR-Policer für die Verarbeitung von zumindest einigen der Uplink- oder Downlink-Daten umfasst;
wobei das Verfahren bei dem APN-AMBR-Policer ferner umfasst, Verwalten, für eine Vielzahl von UE-APN-Kombinationen, einer Höchstmenge von Token, die in einem Zeitintervall zugewiesen werden können, und Gewähren oder Ablehnen der Anforderung für die Zuteilung von Token basierend darauf, ob eine Anzahl von Token, die durch die Anforderung für die Zuteilung von Token angefordert wird, dazu führen würde, dass die Höchstmenge von Token überschritten wird, wobei die Höchstmenge von Token auf der APN-AMBR basiert.

2. Verfahren nach Anspruch 1, wobei das Gewähren oder Verweigern der Anforderung das Gewähren der Anforderung umfasst und bei dem APN-AMBR-Policer ferner umfasst, Übermitteln einer Benachrichtigung über die Gewährung an die erste P-GW-DP-Worker-Instanz und, bei der ersten P-GW-DP-Worker-Instanz, Empfangen der Benachrichtigung über die Zuteilung und Verbrauchen der durch die Zuteilung dargestellten Scheibe der APN-AMBR-Kapazität durch Übertragen der Uplink- oder Downlink-Daten.

3. Verfahren nach Anspruch 1 oder Anspruch 2, wobei das Verwalten von Aufzeichnungen über die von den UEs genutzte APN-AMBR-Kapazität das Verwalten von Aufzeichnungen über die APN-AMBR-Kapazität umfasst, die von PDN-Sitzungen der ersten UE genutzt wird, die den verschiedenen P-GW-DP-Worker-Instanzen zugewiesen sind.

4. Verfahren nach einem der vorhergehenden Ansprüche wobei das Verwalten von Aufzeichnungen über die von den UEs genutzte APN-AMBR-Kapazität das Verwalten von Aufzeichnungen über die APN-AMBR-Kapazität umfasst, die von verschiedenen PDN-Sitzungen verschiedener UEs genutzt wird, die den verschiedenen P-GW-DP-Worker-Instanzen zugewiesen sind.

5. Verfahren nach einem der vorhergehenden Ansprüche wobei das Anfordern einer Zuteilung von Token das Anfordern der Zuteilung von Token als Reaktion auf einen Prozentsatz von gewährten Token umfasst, die für die erste P-GW-DP-Worker-Instanz verfügbar sind, der kleiner als ein Schwellenwert ist.

6. Verfahren nach einem der vorhergehenden Ansprüche, das die Implementierung eines festen oder eines gleitenden Fensters umfasst, in dem Token zugeteilt werden können.

7. Verfahren nach einem der Ansprüche 1 bis 6, wobei das Gewähren oder Ablehnen der Anforderung das Implementieren einer Best-Effort-Token-Zuweisung umfasst, wobei, wenn eine Anzahl von Token, die von der ersten P-GW DP-Worker-Instanz während eines Zeitintervalls angefordert werden, dazu führen würde, dass die maximal zugeteilten Token während des Zeitintervalls überschritten werden, Gewähren eines Restes an Token, der in dem Zeitintervall verfügbar ist und nicht zu einer Überschreitung der Höchstgrenze an Token führen würde.

8. Verfahren nach einem der Ansprüche 1 bis 6, wobei die Gewährung oder Verweigerung der Anforderung die Implementierung einer maximalen Tokenzuteilung umfasst, indem eine Anforderung zur Zuteilung von Token verweigert wird, wenn eine angeforderte Anzahl von Token dazu führen würde, dass die Höchstmenge von Token überschritten wird.

9. System zur Überwachung der aggregierten maximalen Bitrate von Zugangspunkten, APN-AMBR, wobei das System umfasst:
ein Paketdatennetzwerk-, PDN, Gateway, P-GW, mit mindestens einem Prozessor und einer Vielzahl von P-GW-Datenebenen-, DP, Worker-Instanzen, die durch den mindestens einen Prozessor implementiert werden, wobei das P-GW dafür konfiguriert ist, Folgendes zu empfangen: Uplink-Daten, die über einen nicht-garantierten Bitraten-, Nicht-GBR-, Träger, der mit einer ersten PDN-Sitzung verbunden ist, von einer ersten Benutzervorrichtung, UE, über einen Zugangspunkt, AP, übertragen werden sollen, oder Downlink-Daten, die über den Nicht-GBR-Träger an die erste UE über den AP übertragen werden sollen, Weiterleiten der Uplink- oder Downlink-Daten an eine erste P-GW-DP-Worker-Instanz aus der Vielzahl von P-GW-DP-Worker-Instanzen, die der PDN-Sitzung zugewiesen ist, und wobei die erste P-GW DP Worker-Instanz so konfiguriert ist, dass sie eine Scheibe von APN-AMBR-Kapazität zur Verarbeitung der Uplink- oder Downlink-Daten anfordert; und
einen APN-AMBR-Policer, der für Folgendes konfiguriert ist: Verwalten von Aufzeichnungen der APN-AMBR-Kapazität, die von UEs verwendet wird, die PDN-Sitzungen haben, die verschiedenen der P-GW-DP-Worker-Instanzen zugewiesen sind; und Gewähren oder Ablehnen der Anforderung basierend auf der APN-AMBR-Kapazität, die von den PDN-Sitzungen verwendet wird, die den verschiedenen P-GW-DP-Worker-Instanzen zugewiesen sind;
**dadurch gekennzeichnet, dass** die erste P-GW-DP-Worker-Instanz so konfiguriert ist, dass sie die Scheibe der APN-AMBR-Kapazität anfordert, indem sie eine Zuteilung von Token von dem APN-AMBR-Policer für die Verarbeitung von zumindest einigen der Uplink- oder Downlink-Daten anfordert;
wobei der APN-AMBR-Policer für Folgendes konfiguriert ist: Verwalten einer Höchstmenge von Token, die in einem Zeitintervall zugewiesen werden können, und Gewähren oder Ablehnen der Anforderung für die Zuteilung von Token basierend darauf, ob eine Anzahl von Token, die durch die Anforderung für die Zuteilung von Token angefordert wird, dazu führen würde, dass die Höchstmenge von Token überschritten wird, wobei die Höchstmenge von Token auf der APN-AMBR basiert.

10. System nach Anspruch 9, wobei der APN-AMBR-Policer so konfiguriert ist, dass er die Anforderung gewährt, eine Benachrichtigung über die Gewährung an die erste P-GW-DP-Worker-Instanz übermittelt, und wobei die erste P-GW-DP-Worker-Instanz so konfiguriert ist, dass sie die Benachrichtigung über die Gewährung empfängt und die durch die Gewährung dargestellte Scheibe der APN-AMBR-Kapazität verbraucht, indem sie die Uplink- oder Downlink-Daten überträgt.

11. System nach Anspruch 9 oder Anspruch 10, wobei der APN-AMBR-Policer so konfiguriert ist, dass er Aufzeichnungen über die APN-AMBR-Kapazität führt, die von PDN-Sitzungen der ersten UE genutzt wird, die den verschiedenen P-GW-DP-Worker-Instanzen zugewiesen sind.

12. System nach einem der Ansprüche 9 bis 11, wobei der APN-AMBR-Policer so konfiguriert ist, dass er Aufzeichnungen über die APN-AMBR-Kapazität führt, die von verschiedenen PDN-Sitzungen verschiedener UEs genutzt wird, die den verschiedenen P-GW-DP-Worker-Instanzen zugewiesen sind.

13. System nach einem der Ansprüche 9 bis 12, wobei der APN-AMBR-Policer für Folgendes konfiguriert ist: Implementieren einer Best-Effort-Token-Zuweisung, wobei, wenn eine Anzahl von Token, die von der ersten P-GW DP-Worker-Instanz während eines Zeitintervalls angefordert werden, dazu führen würde, dass die maximal zugeteilten Token während des Zeitintervalls überschritten werden, Gewähren eines Restes an Token, der in dem Zeitintervall verfügbar ist und nicht zu einer Überschreitung der Höchstgrenze an Token führen würde, und wobei die Höchstmenge von Token auf der APN-AMBR basiert.

14. System nach einem der Ansprüche 9 bis 12, wobei der APN-AMBR-Policer so konfiguriert ist, dass er die maximale Tokenzuteilung implementiert, indem er eine Anforderung zur Zuteilung von Token verweigert, wenn eine angeforderte Anzahl von Token dazu führen würde, dass die Höchstmenge von Token überschritten wird, wobei die Höchstmenge auf der APN-AMBR basiert.

15. Nicht-flüchtiges computerlesbares Medium, auf dem ausführbare Anweisungen gespeichert sind, die, wenn sie von mindestens einem Prozessor mindestens eines Computers ausgeführt werden, den mindestens einen Computer so steuern, dass er Schritte ausführt, die Folgendes umfassen:
in einem Paketdatennetzwerk-, PDN, Gateway, P-GW, das eine Vielzahl von P-GW-Datenebenen-, DP, Worker-Instanzen umfasst:
Empfangen von Uplink-Daten, die über einen nicht-garantierten Bitraten-, Nicht-GBR-, Träger, der mit einer ersten PDN-Sitzung verbunden ist, von einer ersten Benutzervorrichtung, UE, über einen Zugangspunkt, AP, übertragen werden sollen, oder von Downlink-Daten, die über den Nicht-GBR-Träger an die erste UE über den AP übertragen werden sollen;
Weiterleiten der Uplink- oder Downlink-Daten an eine erste P-GW-DP-Worker-Instanz aus der Vielzahl von P-GW-DP-Worker-Instanzen, die der PDN-Sitzung zugewiesen ist;
bei der ersten P-GW-DP-Worker-Instanz, Übertragen, an einen von dem P-GW getrennten APN-AMBR-Policer, einer Anforderung für eine Scheibe von APN-AMBR-Kapazität zur Verarbeitung der Uplink- oder Downlink-Daten;
bei dem APN-AMBR-Policer:
Verwalten von Aufzeichnungen der APN-AMBR-Kapazität, die von UEs verwendet wird, die PDN-Sitzungen haben, die verschiedenen der P-GW-DP-Worker-Instanzen zugewiesen sind; und
Gewähren oder Ablehnen der Anforderung basierend auf der APN-AMBR-Kapazität, die von den PDN-Sitzungen verwendet wird, die den verschiedenen P-GW-DP-Worker-Instanzen zugewiesen sind;
**dadurch gekennzeichnet, dass** das Übertragen der Anforderung für die Scheibe der APN-AMBR-Kapazität das Anfordern einer Zuteilung von Token von dem APN-AMBR-Policer für die Verarbeitung von zumindest einigen der Uplink- oder Downlink-Daten umfasst;
wobei das Verfahren an dem APN-AMBR-Policer ferner umfasst: Verwalten, für eine Vielzahl von UE-APN-Kombinationen, einer Höchstmenge von Token, die in einem Zeitintervall zugewiesen werden können, und Gewähren oder Ablehnen der Anforderung für die Zuteilung von Token basierend darauf, ob eine Anzahl von Token, die durch die Anforderung für die Zuteilung von Token angefordert wird, dazu führen würde, dass die Höchstmenge von Token überschritten wird, wobei die Höchstmenge von Token auf der APN-AMBR basiert.

## Revendications

1. Procédé servant à réguler le débit APN-AMBR (access point name aggregated maximum bit rate - débit binaire maximum agrégé de noms de point d'accès), le procédé comportant les étapes consistant à :
au niveau d'une passerelle P-GW (packet data network, PDN, gateway - passerelle de réseau PDN [packet data network - réseau de données par paquets]), comprenant au moins un processeur et une pluralité d'instances d'exécutants de plan DP (data plane -plan de données) de passerelle P-GW mises en œuvre par ledit au moins un processeur :
recevoir (800) des données de liaison montante destinées à être transmises sur un support à débit non GBR (non-guaranteed bit rate - débit binaire non garanti) associé à une première session de réseau PDN en provenance d'un premier équipement UE (user equipment - équipement utilisateur) par le biais d'un point d'accès AP (access point - point d'accès) ou des données de liaison descendante destinées à être transmises sur le support à débit non GBR à destination du premier équipement UE par le biais du point d'accès AP ;
transférer les données de liaison montante ou de liaison descendante à une première instance d'exécutant de plan DP de passerelle P-GW parmi la pluralité d'instances d'exécutants de plan DP de passerelle P-GW qui est attribuée à la session de réseau PDN ;
au niveau de la première instance d'exécutant de plan DP de passerelle P-GW, transmettre (802), à un régulateur de débit APN-AMBR séparé de la passerelle P-GW, une demande pour une tranche de capacité de débit APN-AMBR à des fins de traitement des données de liaison montante ou de liaison descendante ;
au niveau du régulateur de débit APN-AMBR :
maintenir (804) des enregistrements de la capacité de débit APN-AMBR utilisée par les équipements UE ayant des sessions de réseau PDN attribuées à différentes instances parmi les instances d'exécutant de plan DP de passerelle P-GW ; et
accorder ou refuser la demande en se basant sur la capacité de débit APN-AMBR utilisée par les sessions de réseau PDN attribuées aux différentes instances parmi les instances d'exécutant de plan DP de passerelle P-GW ;
**caractérisé en ce que** l'étape consistant à transmettre la demande pour la tranche de capacité de débit APN-AMBR comprend l'étape consistant à demander une affectation de jetons en provenance du régulateur de débit APN-AMBR à des fins de traitement d'au moins certaines des données de liaison montante ou de liaison descendante ;
le procédé comportant par ailleurs, au niveau du régulateur de débit APN-AMBR, les étapes consistant à maintenir, pour une pluralité de combinaisons d'équipement UE et de noms de points d'accès APN, une limite maximale de jetons qui peuvent être affectés dans les limites d'un intervalle de temps et à accorder ou refuser la demande d'affectation de jetons en se basant sur le fait qu'un nombre de jetons demandés par la demande d'affectation de jetons provoque ou non le dépassement de la limite maximale de jetons, et la limite maximale de jetons est basée sur le débit APN-AMBR.

2. Procédé selon la revendication 1, dans lequel l'étape consistant à accorder ou à refuser la demande comprend l'étape consistant à accepter la demande et comporte par ailleurs, au niveau du régulateur de débit APN-AMBR, les étapes consistant à communiquer une notification de l'accord à la première instance d'exécutant de plan DP de passerelle P-GW et, au niveau de la première instance d'exécutant de plan DP de passerelle P-GW, à recevoir la notification de l'accord et à consommer la tranche de capacité de débit APN-AMBR représentée par l'accord en transmettant les données de liaison montante ou de liaison descendante.

3. Procédé selon la revendication 1 ou la revendication 2, dans lequel l'étape consistant à maintenir des enregistrements de la capacité de débit APN-AMBR utilisée par les équipements UE comprend l'étape consistant à maintenir des enregistrements de la capacité de débit APN-AMBR utilisée par des sessions de réseau PDN du premier équipement UE qui sont attribuées aux différentes instances parmi les instances d'exécutant de plan DP de passerelle P-GW.

4. Procédé selon l'une quelconque des revendications précédentes, dans lequel l'étape consistant à maintenir des enregistrements de la capacité de débit APN-AMBR utilisée par les équipements UE comprend l'étape consistant à maintenir des enregistrements de la capacité de débit APN-AMBR utilisée par différentes sessions de réseau PDN de différents équipements UE qui sont attribuées aux différentes instances parmi les instances d'exécutant de plan DP de passerelle P-GW.

5. Procédé selon l'une quelconque des revendications précédentes, dans lequel l'étape consistant à demander une affectation de jetons comprend l'étape consistant à demander l'affectation de jetons en réponse à un pourcentage de jetons accordés disponibles pour la première instance d'exécutant de plan DP de passerelle P-GW qui est inférieur à une quantité de seuil.

6. Procédé selon l'une quelconque des revendications précédentes, comportant l'étape consistant à mettre en œuvre une fenêtre fixe ou glissante pendant laquelle des jetons peuvent être accordés.

7. Procédé selon l'une quelconque des revendications 1 à 6, dans lequel l'étape consistant à accorder ou à refuser la demande comprend l'étape consistant à effectuer la mise en œuvre d'une affectation de jetons dans la mesure du possible, dans lequel, si un nombre de jetons demandés par la première instance d'exécutant de plan DP de passerelle P-GW au cours d'un intervalle de temps provoque le dépassement du nombre maximum de jetons affectés au cours de l'intervalle de temps, il faut accorder les jetons restants disponibles pendant l'intervalle de temps ne provoquant pas le dépassement de la limite maximale de jetons.

8. Procédé selon l'une quelconque des revendications 1 à 6, dans lequel l'étape consistant à accorder ou à refuser la demande comprend l'étape consistant à effectuer la mise en œuvre d'une affectation de jetons selon la limite maximale en refusant une demande d'affectation de jetons si un nombre de jetons demandés provoque le dépassement de la limite maximale de jetons.

9. Système servant à réguler le débit APN-AMBR (access point name aggregated maximum bit rate - débit binaire maximum agrégé de noms de point d'accès), le système comportant :
une passerelle P-GW (packet data network, PDN, gateway - passerelle de réseau PDN [packet data network - réseau de données par paquets]), comprenant au moins un processeur et une pluralité d'instances d'exécutants de plan DP (data plane -plan de données) de passerelle P-GW mises en œuvre par ledit au moins un processeur, dans lequel la passerelle P-GW est configurée pour recevoir des données de liaison montante destinées à être transmises sur un support à débit non GBR (non-guaranteed bit rate - débit binaire non garanti) associé à une première session de réseau PDN en provenance d'un premier équipement UE (user equipment - équipement utilisateur), par le biais d'un point d'accès AP (access point - point d'accès) ou des données de liaison descendante destinées à être transmises sur le support à débit non GBR à destination du premier équipement UE par le biais du point d'accès AP, pour transférer les données de liaison montante ou de liaison descendante à une première instance d'exécutant de plan DP de passerelle P-GW parmi la pluralité d'instances d'exécutants de plan DP de passerelle P-GW qui est attribuée à la session de réseau PDN, et la première instance d'exécutant de plan DP de passerelle P-GW est configurée pour demander une tranche de capacité de débit APN-AMBR à des fins de traitement des données de liaison montante ou de liaison descendante ; et
un régulateur de débit APN-AMBR configuré pour maintenir des enregistrements de la capacité de débit APN-AMBR utilisée par les équipements UE ayant des sessions de réseau PDN attribuées à différentes instances parmi les instance d'exécutant de plan DP de passerelle P-GW, et pour accorder ou refuser la demande en se basant sur la capacité de débit APN-AMBR utilisée par les sessions de réseau PDN attribuées aux différentes instances parmi les instances d'exécutant de plan DP de passerelle P-GW ;
**caractérisé en ce que** la première instance d'exécutant de plan DP de passerelle P-GW est configurée pour demander la tranche de capacité de débit APN-AMBR en demandant une affectation de jetons en provenance du régulateur de débit APN-AMBR à des fins de traitement d'au moins certaines des données de liaison montante ou de liaison descendante ;
dans lequel le régulateur de débit APN-AMBR est configuré pour maintenir une limite maximale de jetons qui peuvent être affectés dans les limites d'un intervalle de temps et pour accorder ou refuser la demande d'affectation de jetons en se basant sur le fait qu'un nombre de jetons demandés par la demande d'affectation de jetons provoque ou non le dépassement de la limite maximale de jetons et la limite maximale de jetons est basée sur le débit APN-AMBR.

10. Système selon la revendication 9, dans lequel le régulateur de débit APN-AMBR est configuré pour accorder la demande, communiquer une notification de l'accord à la première instance d'exécutant de plan DP de passerelle P-GW, et dans lequel la première instance d'exécutant de plan DP de passerelle P-GW est configurée pour recevoir la notification de l'accord et pour consommer la tranche de capacité de débit APN-AMBR représentée par l'accord en transmettant les données de liaison montante ou de liaison descendante.

11. Système selon la revendication 9 ou la revendication 10, dans lequel le régulateur de débit APN-AMBR est configuré pour maintenir des enregistrements de la capacité de débit APN-AMBR utilisée par des sessions de réseau PDN du premier équipement UE qui sont attribuées aux différentes instances parmi les instances d'exécutant de plan DP de passerelle P-GW.

12. Système selon l'une quelconque des revendications 9 à 11, dans lequel le régulateur de débit APN-AMBR est configuré pour maintenir des enregistrements de la capacité de débit APN-AMBR utilisée par différentes sessions de réseau PDN de différents équipements UE qui sont attribuées aux différentes instances parmi les instances d'exécutant de plan DP de passerelle P-GW.

13. Système selon l'une quelconque des revendications 9 à 12, dans lequel le régulateur de débit APN-AMBR est configuré pour effectuer la mise en œuvre d'une affectation de jetons dans la mesure du possible, dans lequel si un nombre de jetons demandés par la première instance d'exécutant de plan DP de passerelle P-GW au cours d'un intervalle de temps provoque le dépassement du nombre maximum de jetons affectés au cours de l'intervalle de temps, il faut accorder les jetons restants disponibles pendant l'intervalle de temps ne provoquant pas le dépassement de la limite maximale de jetons, et la limite maximale de jetons est basée sur le débit APN-AMBR.

14. Système selon l'une quelconque des revendications 9 à 12, dans lequel le régulateur de débit APN-AMBR est configuré pour effectuer la mise en œuvre d'une affectation de jetons selon la limite maximale en refusant une demande d'affectation de jetons si un nombre de jetons demandés provoque le dépassement de la limite maximale de jetons, et la limite maximale de jetons est basée sur le débit APN-AMBR.

15. Support non transitoire lisible par ordinateur ayant, stockées sur celui-ci, des instructions en mesure d'être exécutées qui, quand elles sont exécutées par au moins un processeur d'au moins un ordinateur, amènent ledit au moins un ordinateur à effectuer les étapes consistant à :
au niveau d'une passerelle P-GW (packet data network, PDN, gateway - passerelle de réseau PDN [packet data network - réseau de données par paquets]), comprenant une pluralité d'instances d'exécutants de plan DP (data plane -plan de données) de passerelle P-GW :
recevoir des données de liaison montante destinées à être transmises sur un support à débit non GBR (non-guaranteed bit rate - débit binaire non garanti) associé à une première session de réseau PDN en provenance d'un premier équipement UE (user equipment - équipement utilisateur) par le biais d'un point d'accès AP (access point - point d'accès) ou des données de liaison descendante destinées à être transmises sur le support à débit non GBR à destination du premier équipement UE par le biais du point d'accès AP ;
transférer les données de liaison montante ou de liaison descendante à une première instance d'exécutant de plan DP de passerelle P-GW parmi la pluralité d'instances d'exécutants de plan DP de passerelle P-GW qui est attribuée à la session de réseau PDN ;
au niveau de la première instance d'exécutant de plan DP de passerelle P-GW, transmettre, à un régulateur de débit APN-AMBR séparé de la passerelle P-GW, une demande pour une tranche de capacité de débit APN-AMBR à des fins de traitement des données de liaison montante ou de liaison descendante ;
au niveau du régulateur de débit APN-AMBR :
maintenir des enregistrements de la capacité de débit APN-AMBR utilisée par les équipements UE ayant des sessions de réseau PDN attribuées à différentes instances parmi les instances d'exécutant de plan DP de passerelle P-GW ; et
accorder ou refuser la demande en se basant sur la capacité de débit APN-AMBR utilisée par les sessions de réseau PDN attribuées aux différentes instances parmi les instances d'exécutant de plan DP de passerelle P-GW ;
**caractérisé en ce que** l'étape consistant à transmettre la demande pour la tranche de capacité de débit APN-AMBR comprend l'étape consistant à demander une affectation de jetons en provenance du régulateur de débit APN-AMBR à des fins de traitement d'au moins certaines des données de liaison montante ou de liaison descendante ;
le procédé comportant par ailleurs, au niveau du régulateur de débit APN-AMBR, les étapes consistant à maintenir, pour une pluralité de combinaisons d'équipement UE et de noms de points d'accès APN, une limite maximale de jetons qui peuvent être affectés dans les limites d'un intervalle de temps et à accorder ou refuser la demande d'affectation de jetons en se basant sur le fait qu'un nombre de jetons demandés par la demande d'affectation de jetons provoque ou non le dépassement de la limite maximale de jetons, et la limite maximale de jetons est basée sur le débit APN-AMBR.
